# EUROPEAN PATENT APPLICATION

(11) **EP 4 786 271 A1**
(43) Date of publication of application: **05.08.2026**
(21) Application number: 25227245.5
(22) Date of filing: 24.12.2025
(51) Int. Cl.: B60N 2/56, B60N 2/64, B60N 2/70

(54) **VEHICLE SEAT STRUCTURE**

(30) Priority: 31.01.2025 JP 2025015139
(71) Applicant: Suzuki Motor Corporation, Hamamatsu-shi, Shizuoka 432-8611 (JP)
(72) Inventor: ITABASHI, Naoki, Hamamatsu-shi 432-8611 (JP); KANEKO, Wataru, Hamamatsu-shi 432-8611 (JP)
(74) Representative: Plasseraud IP

(57) **Abstract**

[Problem to be Solved] To provide a vehicle seat structure capable of enhancing air blowing efficiency of branched flow paths.

[Solution] In a vehicle seat structure, a flow path forming member 32 forming a flow path for causing air to flow between a seat surface 3A of a seatback 3 and an air blowing fan 4 includes: first to fourth branched flow paths 5A to 5D extending along a rear surface 3B of the seatback 3; a merge part 6 in which the first to the fourth branched flow paths 5A to 5D merge; and first to fourth communication holes 7A to 7D communicating with the first to the fourth branched flow paths 5A to 5D and the seat surface 3A. As for the first and the second branched flow paths 5A and 5B among the first to the fourth branched flow paths 5A to 5D, each of lateral wall surfaces 51A and 51B each positioned at one end side in a prescribed direction that extends along the rear surface 3B and intersects an extending direction of the branched flow paths is structured with a plane that smoothly continues in the extending direction from a basal end to a distal end, and the first and the second communication holes 7A and 7B are arranged to be close to the other end side in the prescribed direction.

## Description

### [Technical Field]

The present invention relates to vehicle seat structures including air-conditioning functions.

### [Background Art]

A conventionally known seat used for a vehicle such as an automobile includes an air-conditioning function capable of conditioning air in the surroundings of a seat surface of a seat part and/or a seatback. For the vehicle seat having the air-conditioning function, a breathable outer layer material is used for the seat surface, and a flow path for causing air to flow to and from an air blowing fan is formed inside a cushion material covered by the outer layer material.

For example, Patent Literature 1 listed below discloses a cushion member including: a seat pad having a concave ventilation flow path extending along a pad rear surface; and a planar flow path lid covering the pad rear surface of the seat pad so as to put a lid on the ventilation flow path. The ventilation flow path of the cushion member is branched into two paths toward the bottom of the seat, from a position overlapping with the fan in the seat front-and-back direction. Formed on the fan side of each of the branched flow paths is an expanded flow path part in which the flow path width is partially enlarged.

### [Citation List]

### [Patent Literature]

[Patent Literature 1] JP 2024-075925 A

### [Summary of Invention]

### [Problems to be Solved by the Invention]

However, in the conventional ventilation flow path structure such as that disclosed in Patent Literature 1 listed above, because the flow path widths of the branched flow paths are partially expanded on the air blowing fan side, of two lateral wall surfaces in the seat width direction defining each of the branched flow paths, one lateral wall surface on the seat inner side has a step formed. The air drawn into the branched flow paths from the seat surface via a plurality of ventilation holes provided on the seat bottom side relative to expanded flow path parts of the branched flow paths flows toward the air blowing fan along the lateral wall surfaces of the branched flow paths. However, there is a problem in that air blowing efficiency of the branched flow paths is degraded by disturbance in airflows caused by the steps in the lateral wall surfaces.

In addition, in the conventional structure, ventilation holes are also provided in the vicinity of the steps on the lateral wall surfaces of the expanded flow path parts. Thus, by the air drawn into the branched flow paths from the seat surface via these ventilation holes, there is also a possibility that airflows from the plurality of ventilation holes provided on the seat bottom side relative to the expanded flow path parts may be obstructed, and air blowing efficiency may further be degraded. The degradation of the air blowing efficiency of the branched flow paths described above is a problem that may occur, not only when the air is drawn into the branched flow paths from the seat surface, but also when air is blown out onto the seat surface from the branched flow paths.

The present invention was made in view of the abovementioned points. An object thereof is to provide a vehicle seat structure capable of enhancing air blowing efficiency of branched flow paths.

### [Means for Solving the Problems]

One aspect of the present invention to achieve the abovementioned object provides a vehicle seat structure including: an air blowing fan that conditions air in a surrounding of a seat surface of a vehicle seat; and a flow path forming member that forms a flow path for causing air to flow between the seat surface and the air blowing fan, wherein the flow path forming member includes: a plurality of branched flow paths extending along a rear surface positioned opposite the seat surface; a merge part in which the plurality of branched flow paths merge; and a plurality of communication holes provided to be arranged along an extending direction of the branched flow paths and communicating with the branched flow paths and the seat surface. In the vehicle seat structure, at least one of the plurality of branched flow paths has a lateral wall surface positioned at one end side in a prescribed direction that extends along the rear surface and intersects the extending direction of the branched flow path, the lateral wall surface being structured with a plane that smoothly continues in the extending direction from a basal end connected to the merge part to a distal end on an opposite side from the merge part, and the communication holes communicating with the branched flow path are arranged to be close to the other end side in the prescribed direction.

### [Advantageous Effects of Invention]

According to the one aspect of the vehicle seat structure of the present invention, it is possible to enhance air blowing efficiency of the branched flow paths.

### [Brief Description of Drawings]

[Figure 1] Figure 1 is a perspective view showing an external appearance of a vehicle seat structure according to an embodiment of the present invention.
[Figure 2] Figure 2 is an exploded perspective view of a seatback according to the embodiment.
[Figure 3] Figure 3 is a rear view of the seatback.
[Figure 4] Figure 4 is a rear view of a flow path forming member.
[Figure 5] Figure 5 is a cross-sectional rear view of the seatback taken at line A-A in Figure 1.
[Figure 6] Figure 6 is a cross-sectional rear view of a seatback cushion in Figure 5.
[Figure 7] Figure 7 is a cross-sectional rear view of a first airtight part in Figure 5.
[Figure 8] Figure 8 is a rear view of a second airtight part in Figure 5.
[Figure 9] Figure 9 is a perspective view of the first airtight part in Figure 7 as seen from a seat front diagonally left direction.
[Figure 10] Figure 10 is a drawing showing schematic structures according to first to third modification examples relevant to the embodiment.

### [Mode for Carrying Out the Invention]

The following will describe embodiments of the present invention in detail, with reference to the accompanying drawings.

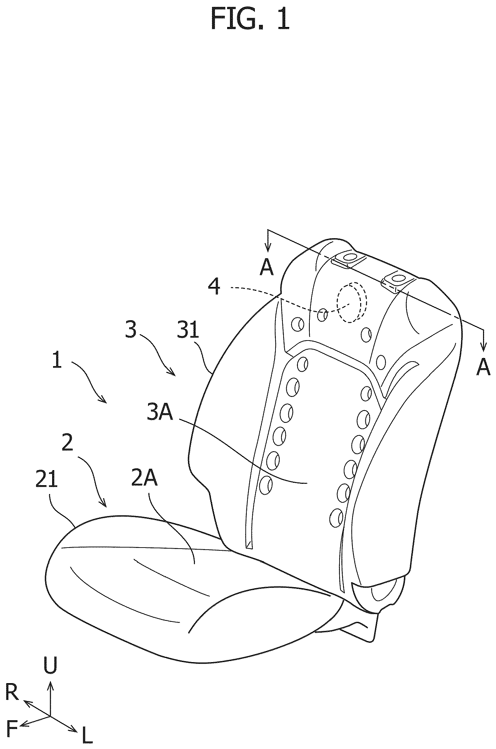

Figure 1 is a perspective view showing an external appearance of a vehicle seat structure according to an embodiment of the present invention. In the drawings explained below, the direction indicated by an arrow F corresponds to the forward direction in terms of the seat front-and-back direction. The direction indicated by an arrow U corresponds to the upward direction in terms of the seat up-and-down direction. The directions indicated by an arrow R and the direction indicated by an arrow L correspond to the right and the left directions as an occupant is facing forward when being seated on the seat.

The vehicle seat structure of the present embodiment may be applied, for example, to a vehicle seat 1 that has an air-conditioning function and is to be installed in a vehicle such as an automobile. The vehicle seat 1 includes, as shown in Figure 1, a seat part 2 and a seatback 3.

The seat part 2 is a section on which the occupant is seated. In the seat part 2, a seat part cushion 21 forming a seating surface 2A is installed in an upper part of a seat part frame (not shown). Of the seat part cushion 21, an upper part (the seating surface 2A), a front part, a rear part, and left and right side parts are covered by a seat part cover (not shown) serving as an outer layer material.

The seatback 3 is a section extending upward from a rear part of the seat part 2. The seatback 3 is configured to support the occupant seated on the seat part 2, especially the upper body. It should be noted, however, that Figure 1 shows a state in which a headrest (not shown) has been removed from the seatback 3. As for the seatback 3, a seatback cushion 31 forming a seat surface 3A (a backrest surface) is installed in a front part of a seatback frame (not shown). Fixed to an upper part of the seatback frame is an air blowing fan 4 (broken line in Figure 1) for conditioning the air in the surroundings of the seat surface 3A. The air blowing fan 4 is connected to a flow path (explained later) formed inside the seatback 3. The seatback cushion 31 is provided so as to encircle the surroundings of the air blowing fan 4. The seatback 3 accommodating therein the air blowing fan 4 and the like is covered from the outside by a seatback cover (not shown) serving as an outer layer material. In the present embodiment, the seatback cushion 31 corresponds to a "cushion part" of the present invention.

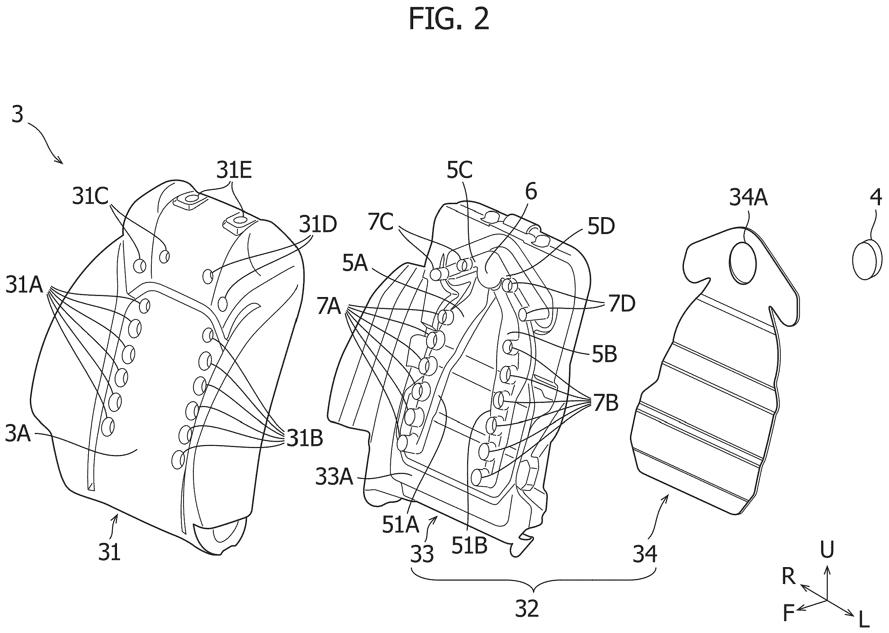

Here, a structure of the seatback 3 of the present embodiment will be explained in detail, with reference to Figure 2 to Figure 4.

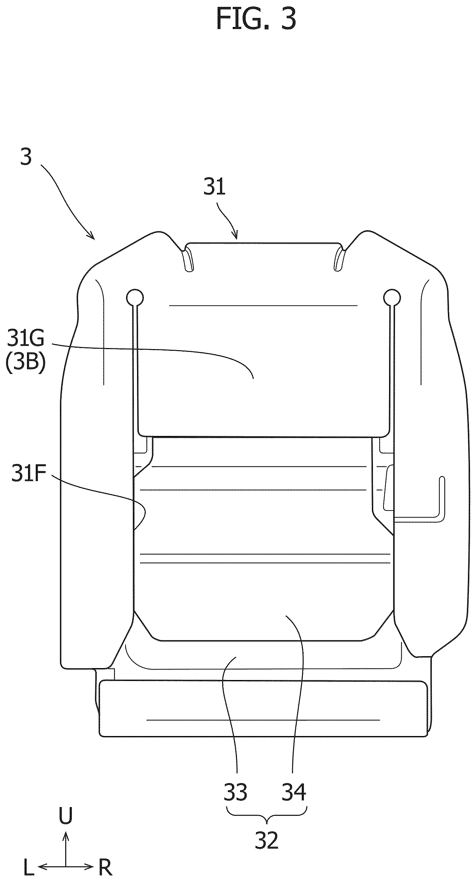

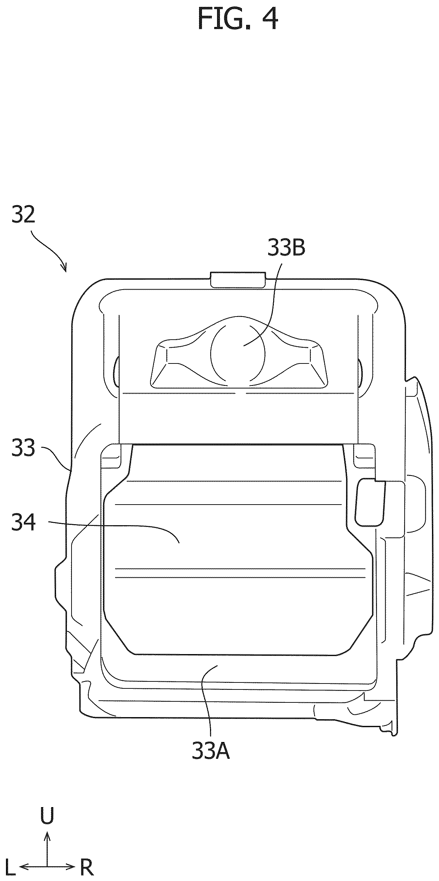

Figure 2 is an exploded perspective view of the seatback 3. Figure 3 is a rear view of the seatback 3. Figure 4 is a rear view of a state in which a flow path forming member 32 alone remains after the seatback cushion 31 is removed from the seatback 3 in Figure 3.

The seatback 3 of the present embodiment includes, as shown in Figure 2 to Figure 4, the seatback cushion 31 (the cushion part) forming the seat surface 3A described above; and the flow path forming member 32 attached to the rear surface side of the seatback cushion 31. The flow path forming member 32 is a member that forms the flow path for causing air to flow between the seat surface 3A and the air blowing fan 4. In this situation, the flow path forming member 32 is structured with a first airtight part 33 and a second airtight part 34.

The seatback cushion 31 is formed by shaping a foamed material or the like having a resilient characteristic thereinto, and the front face thereof forms the seat surface 3A to support the back of the occupant. Formed on the front face side of the seatback cushion 31 are a plurality of air blowing openings 31A, 31B, 31C, and 31D (Figure 2). Each of the air blowing openings 31A to 31D communicates with the flow path for the air formed by the flow path forming member 32. Provided in an upper part of the seatback cushion 31 are a pair of attachment holes 31E used for attaching the headrest (not shown).

Formed in a large area on the rear face side of the seatback cushion 31 is a concave part 31F curving forward. To the concave part 31F, the flow path forming member 32 is attached (Figure 3). An upper side section of the concave part 31F is covered from the rear side by a cover part 31G extending downward from a rear side section of the upper part of the seatback cushion 31. The cover part 31G covers and hides the air blowing fan 4 provided in an upper part of the flow path forming member 32 attached to the concave part 31F, an upper part of the seatback frame supporting the air blowing fan 4, and the like and has a function of mitigating an impact that may be received from the air blowing fan 4 and the like, when an object positioned behind the vehicle seat 1 collides with an upper part of the seatback 3. The rear face of the cover part 31G forms an upper part of a rear surface 3B positioned opposite the seat surface 3A of the seatback 3. The rear surface 3B of the seatback 3 includes, in addition to the rear face of the cover part 31G, rear faces of left and right side parts and a lower part of the seatback cushion 31.

The first and the second airtight parts 33 and 34 of the flow path forming member 32 are formed by shaping thereinto a material that is firmer and less breathable than that of the seatback cushion 31. In the present embodiment, as the material that is firmer and less breathable than that of the seatback cushion 31, felt or the like, is used. By forming the first and the second airtight parts 33 and 34 by shaping thereinto the material that is firmer than that of the seatback cushion 31, it is possible to reduce the chance of having the flow path volume decreased by a deformation in the surroundings of the flow path of the flow path forming member 32 which may be caused by a load acting on the seatback cushion 31 when the occupant sits thereon or the like. In addition, by using, for the first and the second airtight parts 33 and 34, the material that is less breathable than that of the seatback cushion 31, it is possible to make it difficult for the air in the flow path to leak to the outside of the flow path, while providing the seatback cushion 31 with a desirable cushioning characteristic.

In the situation in which the surroundings of the flow path of the flow path forming member 32 are not to be deformed even in the event that a load of the occupant or the like acts on the seatback cushion 31, it is acceptable to use a material that is as firm as that of the seatback cushion 31 or a material that is softer than that of the seatback cushion 31, as the material of at least one selected from between the first and the second airtight parts 33 and 34. In an example, when a material that has relatively low breathability is used as the material of the seatback cushion 31, it is acceptable to use a material that is less breathable than that of the seatback cushion 31 or a material that is as breathable as that of the seatback cushion 31, as the material of at least one selected from between the first and the second airtight parts 33 and 34.

More specifically, the first airtight part 33 has an exterior shape corresponding to the concave part 31F and the cover part 31G of the seatback cushion 31 (Figure 2 and Figure 4). A front side section 33A of the first airtight part 33 corresponding to the concave part 31F is formed with shaping as layers spreading substantially in up-and-down directions and left-and-right directions, and a plurality of projections and recesses are formed in front-and-back directions (Figure 2). The projections and the recesses of the front side section 33A are designed so as to correspond to the structure of the flow path and the like, which will be explained in detail later. An upper end section of the first airtight part 33 is folded back toward the rear side and extends downward. A cover section 33B that covers an upper part of the front side section 33A from the rear is provided (Figure 4). The cover section 33B of the first airtight part 33 has formed therewith projections and recesses corresponding to the shape of the air blowing fan 4.

The second airtight part 34 is formed with shaping as layers spreading substantially in the up-and-down directions and the left-and-right directions. Formed in an upper side section of the second airtight part 34 is an opening part 34A corresponding to the shape of the air blowing fan 4. The second airtight part 34 is joined with the front side section 33A of the first airtight part 33 from the side (the rear side) opposite to the seatback cushion 31. The upper side section of the second airtight part 34 is inserted between the upper part of the front side section 33A and the cover section 33B of the first airtight part 33. By combining the flow path forming member 32 including the first and the second airtight parts 33 and 34 configured as described above with the seatback cushion 31, it is possible to realize projections and recesses of the flow path and the like provided inside the seatback 3, with a high level of precision.

In other words, if an attempt was made to directly form the projections and the recesses of the flow path and the like at the time of forming the seatback cushion 31 by shaping a foamed material or the like thereinto, it might be difficult in some situations to precisely realize the projections and the recesses in the seatback cushion 31, due to the fact that manufacturing conditions used in a foaming step of the seatback cushion 31 or the like are different from manufacturing conditions used for forming the projections and the recesses with a high level of precision. To cope with these situations, by structuring the flow path forming member 32 as a different body from the seatback cushion 31, it is possible to manufacture the flow path forming member 32 in a different step from that of the seatback cushion 31, i.e., to form the projections and the recesses in the flow path forming member 32 without being dependent on the manufacturing conditions of the seatback cushion 31. Attaching the flow path forming member 32 to the concave part 31F of the seatback cushion 31 makes it easier to realize the projections and the recesses having a high level of precision. In addition, because the projections and the recesses are formed by the flow path forming member 32 using a firmer material than that of the seatback cushion 31, it is possible to retain the high-precision projections and recesses relatively stably, even when a load is imposed on the seatback cushion 31 as a result of the occupant sitting thereon.

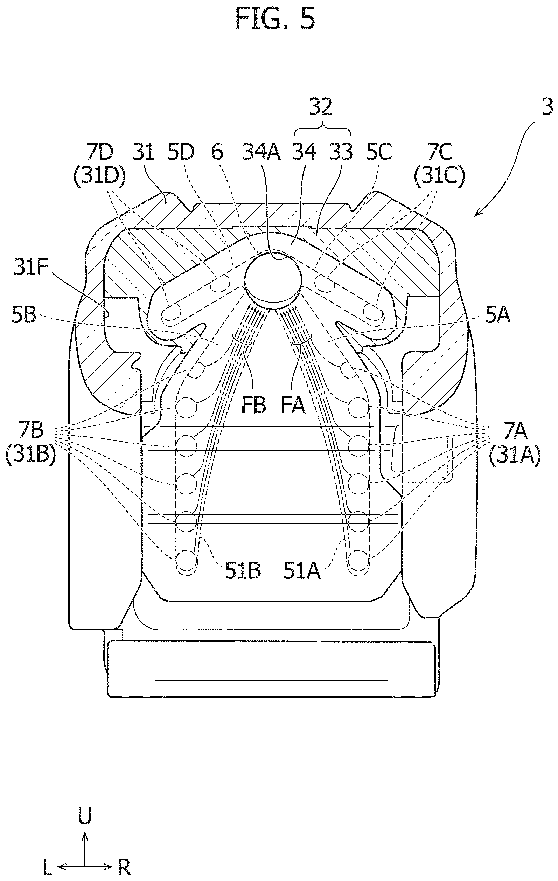

Next, a structure of the flow path formed by the flow path forming member 32 according to the present embodiment will be explained in detail, with reference also to Figure 5 to Figure 9.

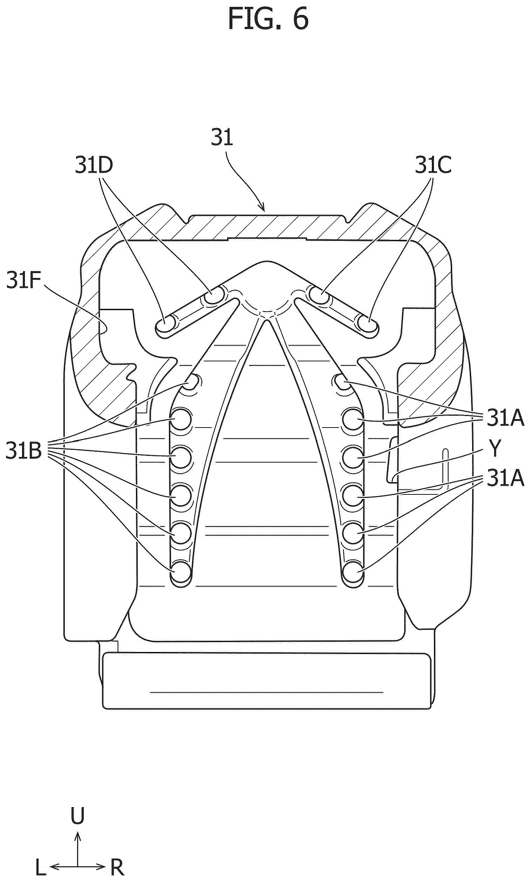

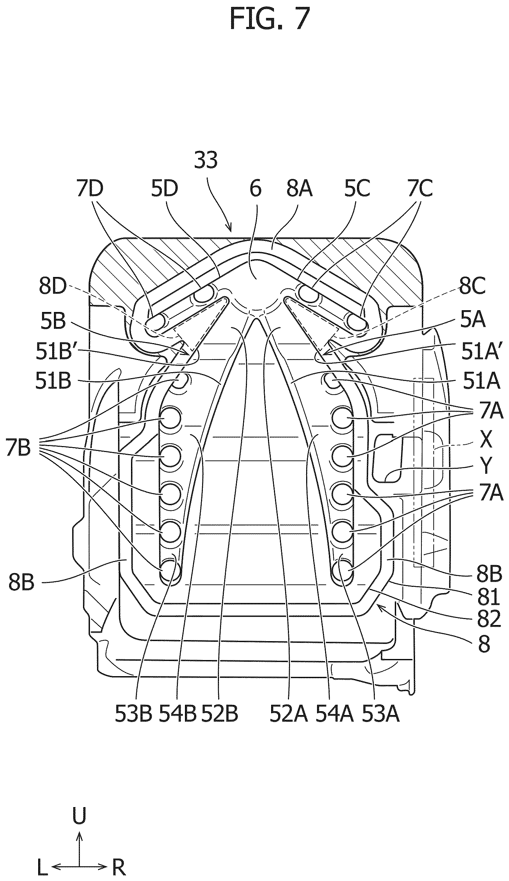

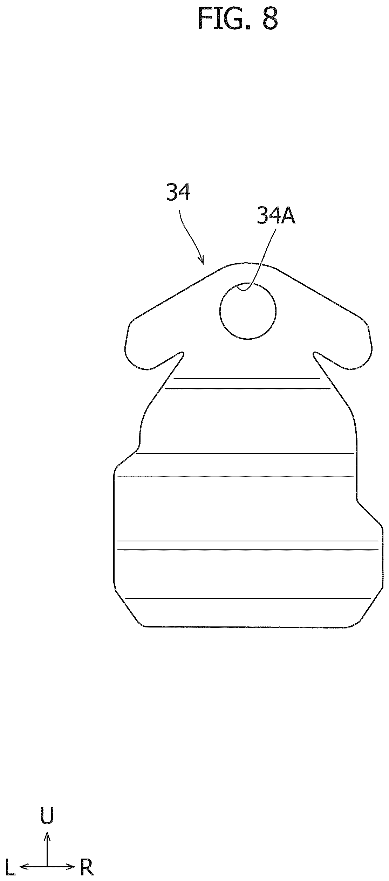

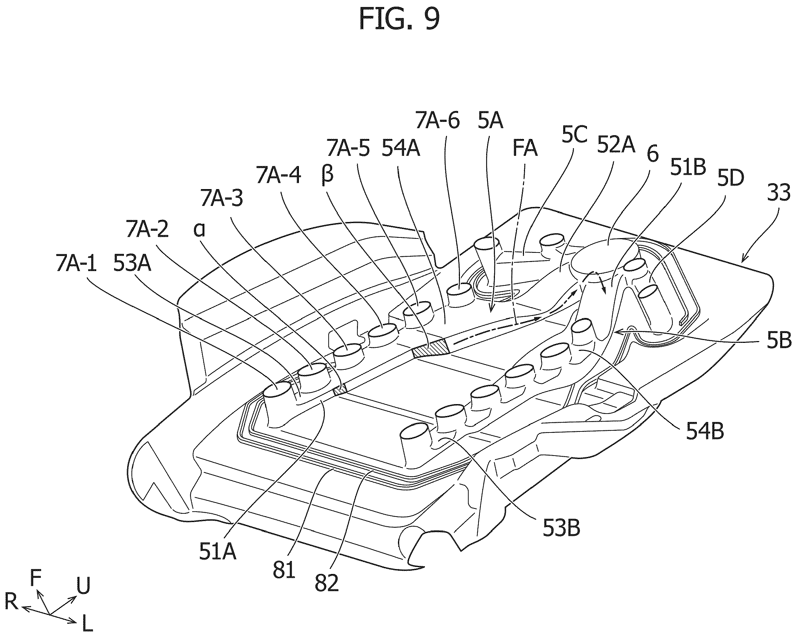

Figure 5 is a cross-sectional rear view of the seatback 3 taken at line A-A in Figure 1. Figure 6 is a cross-sectional rear view of the seatback cushion 31 in Figure 5. Figure 7 is a cross-sectional rear view of the first airtight part 33 in Figure 5. Figure 8 is a rear view of the second airtight part 34 in Figure 5. Figure 9 is a perspective view of the first airtight part 33 in Figure 7 as seen from a seat front diagonally left direction.

As explained above, inside the seatback 3 of the present embodiment, the flow path for causing the air to flow between the seat surface 3A and the air blowing fan 4 is formed by the first and the second airtight parts 33 and 34 of the flow path forming member 32. As shown in Figure 2 and Figure 5 to Figure 9, the flow path includes: a plurality of branched flow paths 5A, 5B, 5C, and 5D; a merge part 6 in which the branched flow paths 5A to 5D merge; and a plurality of communication holes 7A, 7B, 7C, and 7D corresponding to the branched flow paths 5A to 5D.

The plurality of branched flow paths 5A to 5D extend along the rear surface 3B positioned opposite the seat surface 3A of the seatback 3. In the present embodiment, the four branched flow paths 5A to 5D are formed by the first and the second airtight parts 33 and 34 of the flow path forming member 32 attached to the concave part 31F of the seatback cushion 31.

The first branched flow path 5A extends from a right lower part of the flow path forming member 32 to an upper part at the center in the seat width direction, while tilting toward an inner side (the left side) in the seat width direction as approaching the top of the seat. The second branched flow path 5B extends from a left lower part of the flow path forming member 32 to the upper part at the center in the seat width direction, while tilting toward an inner side (the right side) in the seat width direction approaching the top of the seat. The first branched flow path 5A and the second branched flow path 5B are structured to be bilaterally symmetrical.

The third branched flow path 5C extends from a right upper part of the flow path forming member 32 to the upper part at the center in the seat width direction, while tilting toward the top of the seat as approaching an inner side (the left side) in the seat width direction. The fourth branched flow path 5D extends from a left upper part of the flow path forming member 32 to the upper part at the center in the seat width direction, while tilting toward the top of the seat as approaching an inner side (the right side) in the seat width direction. The third branched flow path 5C and the fourth branched flow path 5D are structured to be bilaterally symmetrical.

The merge part 6 is a section in which the first to the fourth branched flow paths 5A to 5D merge together in one location (Figure 2, Figure 5, and Figure 7). In the present embodiment, one end part (an upper end part) in the extending direction of each of the first to the fourth branched flow paths 5A to 5D is connected to the merge part 6 positioned in the upper part at the center in the seat width direction. The air blowing fan 4 is provided on the seat rearward side of the merge part 6 via the opening part 34A of the second airtight part 34 (Figure 2, Figure 5, and Figure 8).

In the first airtight part 33 of the flow path forming member 32, recessed sections are formed with shaping that open on the seat rearward side and that respectively correspond to the first to the fourth branched flow paths 5A to 5D and the merge part 6 described above (Figure 2 and Figure 7). The second airtight part 34 of the flow path forming member 32 is joined with the first airtight part 33 by using an adhesive agent or the like, so as to cover the recessed section of the first airtight part 33 from the seat rearward side and to close open sections of the first to the fourth branched flow paths 5A to 5D and the merge part 6 (Figure 2 and Figure 8).

A joining face 8 being an adhesion location of the first and the second airtight parts 33 and 34 is provided, as shown in Figure 7, on the face of the first airtight part 33 facing the seat rearward side. The joining face 8 circles around so as to surround the outside of the open sections of the first to the fourth branched flow paths 5A to 5D and the merge part 6. The joining face 8 includes: an outer groove part 81 extending along an outer peripheral edge; and an inner groove part 82 extending along an inner peripheral edge. The outer groove part 81 and the inner groove part 82 are curving toward the seat forward side and are open to the seat rearward side (Figure 7 and Figure 9). A part of the inner groove part 82 overlaps with opening edges of the first to the fourth branched flow paths 5A to 5D, and the joining face 8 in that part is positioned adjacent to the first to the fourth branched flow paths 5A to 5D. In the present embodiment, a proximal section 8A of the joining face 8 positioned closer to the merge part 6 is formed so as to extend along the merge part 6 and the first to the fourth branched flow paths 5A to 5D, whereas a distal section 8B positioned farther from the merge part 6 is formed so as to be apart from each of the first and the second branched flow paths 5A and 5B (Figure 7).

More specifically, the distal section 8B of the joining face 8 has a bilaterally asymmetrical shape in correspondence with a pullout port Y used for pulling out a cord-like body such as a harness connected to a seat component part X (the two-dot chain line in Figure 7) such as a seat air bag provided in a right side section of the seatback cushion 31. In the present example, the seatback cushion 31 and the first airtight part 33 each have the pullout port Y formed in the right side section at the center in the up-and-down direction. A right side site of the distal section 8B of the joining face 8 is formed so as to be adjacent to the inner side in the seat width direction and the lower side of the pullout port Y. Accordingly, the up-and-down length of the right side site of the distal section 8B is shorter than the up-and-down length of the left side site of the distal section 8B. In another example, when the seat component part X is not provided, the distal section 8B of the joining face 8 may have a bilaterally symmetrical shape.

As for the joining face 8, the area of an adjacent region 8C (the broken line in Figure 7) in which the first branched flow path 5A and the third branched flow path 5C are adjacent to each other is set to be larger than the area of a region in which these branched flow paths are not adjacent to each other. Similarly, the area of an adjacent region 8D (the broken line in Figure 7) in which the second branched flow path 5B and the fourth branched flow path 5D are adjacent to each other is set to be larger than the area of a region in which these branched flow paths are not adjacent to each other. With this arrangement, when suction force from the air blowing fan 4 acts on each of the first to the fourth branched flow paths 5A to 5D, displacements of the flow path forming member 32 and the seatback cushion 31 are regulated by joining of the relatively large areas of the adjacent regions 8C and 8D. It is therefore possible to reduce the chance of having the flow paths narrowed. In particular, when there is a pressure difference in the drawing force between the first branched flow path 5A and the third branched flow path 5C and/or between the second branched flow path 5B and the fourth branched flow path 5D, the abovementioned advantageous effect is effective.

In addition, in relation to the abovementioned joining face 8, the seatback cushion 31 and the first and the second airtight parts 33 and 34 of the flow path forming member 32 have steps formed therewith, in such a manner that sites α and β (Figure 9) in which increase amounts in the flow path depths (explained later) are relatively larger in the first and the second branched flow paths 5A and 5B are each stretched in the seat width direction. Due to the steps, because joining areas (adhesion areas) between the seatback cushion 31 and the first airtight part 33 and between the first airtight part 33 and the second airtight part 34 increase, it is possible to enhance joining strengths therebetween. Furthermore, when the second airtight part 34 is adhered to the first airtight part 33, it is possible to determine the position of the second airtight part 34 with respect to the first airtight part 33 while using the steps as a reference and to thus perform the adhering work easily.

The plurality of communication holes 7A to 7D are provided to be arranged along the extending direction of the first to the fourth branched flow paths 5A to 5D. In the present embodiment, for the first branched flow path 5A, six first communication holes 7A are provided at intervals in a distal end side section (a lower end side section positioned on the opposite side from the merge part 6) in the extending direction of the first branched flow path 5A. Similarly, for the second branched flow path 5B, six second communication holes 7B are provided at intervals in a distal end (a lower end) side section in the extending direction of the second branched flow path 5B. In addition, for the third branched flow path 5C, two third communication holes 7C are provided at both end parts in the extending direction of the third branched flow path 5C. Similarly, for the fourth branched flow path 5D, two fourth communication holes 7D are provided at both end parts in the extending direction of the fourth branched flow path 5D.

The first to the fourth communication holes 7A to 7D each have a tubular shape extending in the seat forward direction from a front wall part of a corresponding one of the first to the fourth branched flow paths 5A to 5D. Basal end parts (rear end parts) of the first to the fourth communication holes 7A to 7D communicate with the first to the fourth branched flow paths 5A to 5D. Also, distal end parts (front end parts) of the first to the fourth communication holes 7A to 7D are inserted in the air blowing openings 31A to 31D of the seatback cushion 31 so as to communicate with the seat surface 3A of the seatback 3 via the air blowing openings 31A to 31D.

In the flow path formed by the first and the second airtight parts 33 and 34 of the flow path forming member 32 as described above, the first and the second branched flow paths 5A and 5B among the first to the fourth branched flow paths 5A to 5D have lateral wall surfaces 51A and 51B positioned at one end side (in the present embodiment, the left end side of the first branched flow path 5A and the right end side of the second branched flow path 5B in the seat width direction (the left-and-right direction)) in a prescribed direction that extends along the rear surface 3B of the seatback 3 and intersects the extending direction of the branched flow paths. Each of the lateral wall surfaces 51A and 51B is structured with a plane that smoothly continues in the extending direction from the basal end connected to the merge part 6 to the distal end on the opposite side from the merge part 6 (Figure 2 and Figure 7).

Furthermore, for the first and the second branched flow paths 5A and 5B, the first and the second communication holes 7A and 7B communicating therewith are arranged to be close to the other end side in the prescribed direction (in the present embodiment, the right end side of the first branched flow path 5A and the left end side of the second branched flow path 5B in the seat width direction (the left-and-right direction)) (Figure 7). In the present embodiment, among the first to the fourth branched flow paths 5A to 5D, the first and the second branched flow paths 5A and 5B correspond to "at least one of the plurality of branched flow paths" of the present invention.

More specifically, the first branched flow path 5A of the present embodiment includes: a basal end part 52A connected to the merge part 6; a distal end part 53A positioned on the opposite side from the merge part 6 in the extending direction; and an enlarged part 54A connecting together the basal end part 52A and the distal end part 53A (Figure 7). In this situation, the enlarged part 54A is formed in such a manner that the flow path width in the width direction (the left-and-right direction) is greater than the flow path widths in the width direction (the left-and-right direction) in the basal end part 52A and the distal end part 53A.

As for the first branched flow path 5A, the lateral wall surface 51A at the one end side (the left side) in the width direction extends from the basal end (the upper end) connected to the merge part 6 to the distal end (the lower end), while gradually curving outwardly (to the right) in the width direction, approaching the bottom. In contrast, a lateral wall surface 51A' at the other end side (the right side) in the width direction extends from the basal end (the upper end) while tilting outwardly (to the right) in the width direction approaching the bottom, and subsequently bends so as to extend straight downwardly to the distal end (the lower end).

Because the left and the right lateral wall surfaces 51A and 51A' are shaped in this manner, the flow path width of the first branched flow path 5A is greater at the enlarged part 54A, as compared to at the basal end part 52A and the distal end part 53A. In addition, the flow path width of the enlarged part 54A increases from the section connected to the distal end part 53A toward a central section in the extending direction and subsequently decreases from the central section toward the section connected to the basal end part 52A.

The six first communication holes 7A communicating with the first branched flow path 5A are positioned close to the lateral wall surface 51A' at the other end side (the right side) of the first branched flow path 5A in the width direction, and are arranged at intervals in the extending direction (substantially the up-and-down direction) of the first branched flow path 5A. As a result of the first communication holes 7A being arranged in this manner, the intervals between the lateral wall surface 51A at the one end side (the left side) of the first branched flow path 5A in the width direction and the first communication holes 7A increase toward the basal end part 52A in the extending direction.

Similarly to the first branched flow path 5A described above, the second branched flow path 5B includes: a basal end part 52B, a distal end part 53B, and an enlarged part 54B. The enlarged part 54B is formed in such a manner that the flow path width in the width direction is greater than the flow path widths in the width direction in the basal end part 52B and the distal end part 53B (Figure 7).

As for the second branched flow path 5B, the lateral wall surface 51B at one end side (the right side) in the width direction extends from the basal end (the upper end) to the distal end (the lower end), while gradually curving outwardly (to the left) in the width direction, approaching the bottom. In contrast, a lateral wall surface 51B' at the other end side (the left side) in the width direction extends from the basal end (the upper end) while tilting outwardly (to the left) in the width direction approaching the bottom, and subsequently bends so as to extend straight downwardly to the distal end (the lower end).

Because the left and the right lateral wall surfaces 51B and 51B' are shaped in this manner, the flow path width of the second branched flow path 5B is greater at the enlarged part 54B, as compared to at the basal end part 52B and the distal end part 53B. In addition, the flow path width of the enlarged part 54B increases from the section connected to the distal end part 53B toward a central section in the extending direction and subsequently decreases from the central section toward the section connected to the basal end part 52B.

The six second communication holes 7B communicating with the second branched flow path 5B are positioned close to the lateral wall surface 51B' at the other end side (the left side) of the second branched flow path 5B in the width direction, and are arranged at intervals in the extending direction (substantially the up-and-down direction) of the second branched flow path 5B. As a result of the second communication holes 7B being arranged in this manner, the intervals between the lateral wall surface 51B at the one end side (the right side) of the second branched flow path 5B in the width direction and the second communication holes 7B increase toward the basal end part 52B in the extending direction.

Among the first to the fourth branched flow paths 5A to 5D, the flow path width of each of the third and the fourth branched flow paths 5C and 5D is substantially constant in the extending direction, and the third and the fourth communication holes 7C and 7D are formed over substantially the entire flow path width. The difference in the structures of the third and the fourth branched flow paths 5C and 5D as compared to the first and the second branched flow paths 5A and 5B stems from the lengths of the third and the fourth branched flow paths 5C and 5D in the extending direction being relatively shorter so that the quantities of the third and the fourth communication holes 7C and 7D arranged therein are relatively smaller, and thus, a relatively higher air blowing efficiency is achieved by the third and the fourth communication holes 7C and 7D.

In addition, the enlarged parts 54A and 54B of the first and the second branched flow paths 5A and 5B in the present embodiment are formed in such a manner that the flow path depths in the thickness direction (the seat front-and-back direction) orthogonal to the extending directions thereof and to the rear surface 3B of the seatback 3 gradually increase from the sections connected to the distal end parts 53A and 53B toward the central section in the extending direction (Figure 2 and Figure 9). Furthermore, the enlarged parts 54A and 54B are formed in such a manner that the abovementioned flow path depths in the thickness direction decrease from the central section in the extending direction toward the sections connected to the basal end parts 52A and 52B and subsequently increase. The following will more specifically explain the increases and the decrease in the flow path depth of the enlarged part 54A of the first branched flow path 5A, with reference to Figure 9. Because the enlarged part 54B of the second branched flow path 5B has a bilaterally symmetrical relationship with the enlarged part 54A of the first branched flow path 5A, explanations about the increases and the decrease of the flow path depth thereof will be omitted.

In the perspective view shown in Figure 9 in which the first airtight part 33 is seen from the seat front diagonally left direction, the flow path depth of the enlarged part 54A of the first branched flow path 5A in the thickness direction (the seat front-and-back direction) corresponds to the length, in the front-and-back direction, of the lateral wall surface 51A of the first branched flow path 5A. The flow path depth of the enlarged part 54A (the length of the lateral wall surface 51A in the front-and-back direction) slightly increases from the vicinity of the first communication hole 7A-1 positioned at the distal end part 53A of the first branched flow path 5A approaching the second communication hole 7A-2 in the extending direction. The increase amount is relatively greater at a site α (indicated with a hatching in Figure 9) corresponding to the position of the second communication hole 7A-2. In addition, the flow path depth of the enlarged part 54A slightly increases from the vicinity of the second communication hole 7A-2 approaching the fourth communication hole 7A-4 past the third communication hole 7A-3, so that the increase amount thereof becomes relatively greater also at a site β corresponding to the position of the fourth communication hole 7A-4 and remains in that state up to the vicinity of the fifth communication hole 7A-5.

In the present embodiment, the example was explained in which the increase amount in the flow path depth of the enlarged part 54A becomes relatively greater at the sites α and β corresponding to the positions of the second and the fourth communication holes 7A-2 and 7A-4. However, another example is also acceptable in which the increase amount in the flow path depth becomes relatively greater at a site corresponding to the position of another communication hole 7A in addition to those described above. In addition, examples of the "site corresponding to the position of a communication hole" in which the increase amount in the flow path depth becomes relatively greater may include both a site such as the site α positioned at one end side of the communication hole and a site such as the site β positioned so as to connect two adjacent communication holes.

Furthermore, the flow path depth of the enlarged part 54A slightly increases or remains substantially constant from the vicinity of the fifth communication hole 7A-5 up to the vicinity of the sixth communication hole 7A-6, temporarily decreases approaching the basal end part 52A connected to the merge part 6, and subsequently increases. That is, the first branched flow path 5A in the present embodiment is formed in such a manner that the flow path depth in the thickness direction gradually increases over a transition from the position of the first communication hole 7A-1 farthest from the merge part 6 to the position of the sixth communication hole 7A-6 closest to the merge part 6 and subsequently shifts to decrease between the sixth communication hole 7A-6 and the merge part 6, before increasing again.

Because of the relationships described above regarding the flow path widths and the flow path depth, the area (flow path cross-sectional area) of the first branched flow path 5A on a cross-section orthogonal to the extending direction increases from the distal end part 53A up to the vicinity of the central section in the extending direction of the enlarged part 54A, shifts to a decrease just before the basal end part 52A, and subsequently increases again or becomes constant. The flow volume, the flow rate, the flow direction, and the like of the air flowing through the first branched flow path 5A are adjusted by such increases and decreases in the flow path cross-sectional area.

For example, when the air blowing fan 4 is operated in such a direction that the air in the surroundings of the seat surface 3A of the seatback 3 is drawn into the first to the fourth branched flow paths 5A to 5D via the first to the fourth communication holes 7A to 7D, in the first and the second branched flow paths 5A and 5B among the first to the fourth branched flow paths 5A to 5D, airflows FA and FB are generated as indicated by the single-dot chain line arrow in Figure 5. The following will specifically explain the airflow FA in the first branched flow path 5A, with reference also to Figure 9. Explanations about the airflow FB in the second branched flow path 5B, which is similar, will be omitted.

The air drawn from the seat surface 3A of the seatback 3 into the first communication hole 7A-1 arranged at the distal end part 53A of the first branched flow path 5A flows through the communication hole 7A-1 toward the seat rear, and when having reached the distal end part 53A of the first branched flow path 5A, changes the flowing direction to the extending direction of the first branched flow path 5A, so as to flow through the enlarged part 54A toward the merge part 6 along the lateral wall surface 5 1A on the inner side (the left side) in the width direction (Figure 5). In this situation, the air drawn into the second communication hole 7A-2 positioned on the downstream side of the first communication hole 7A-1 also flows through the enlarged part 54A of the first branched flow path 5A toward the merge part 6. However, because the second communication hole 7A-2 is arranged to be close to the outer side (the right side) in the width direction, so that a gap is formed between the second communication hole 7A-2 and the lateral wall surface 51A, the air from the first communication hole 7A-1 flows through the gap, and thus, the airflow is not easily obstructed by the airflow from the second communication hole 7A-2.

The flow path width of the enlarged part 54A in the first branched flow path 5A increases toward the central section in the extending direction. Thus, the intervals between the second and later communication holes 7A-2 to 7A-6 and the lateral wall surface 51A become larger toward the downstream side (Figure 5). In addition, in the present embodiment, because the flow path depth of the enlarged part 54A increases toward the central section in the extending direction, the flow path cross-sectional areas in the positions of the second and later communication holes 7A-2 to 7A-6 become larger toward the downstream side. Accordingly, the airflows from the second to the fifth communication holes 7A-2 to 7A-5 are not easily obstructed by the airflows from the third to the sixth communication holes 7A-3 to 7A-6 that are positioned on the downstream side thereof respectively. That is, the air drawn into the first branched flow path 5A from each of the first to the sixth communication holes 7A-1 to 7A-6 smoothly flows along the lateral wall surface 5 1A of the first branched flow path 5A.

Because the flow path width and the flow path depth of the enlarged part 54A decrease toward the basal end part 52A, the speed (the flow rate) of the airflow FA from the first to the sixth communication holes 7A-1 to 7A-6 is increased. As a result of increasing the flow rate through the enlarged part 54A on the basal end part 52A side (the downstream side), the air flows even more smoothly through the enlarged part 54A on the distal end part 53A side (the upstream side).

Because the flow path depth of the basal end part 52A is increased, the airflow FA having reached the basal end part 52A of the first branched flow path 5A flows into the inside of the merge part 6 in the state that the area at a connection port between the basal end part 52A and the merge part 6 is large. On the inside of the merge part 6, the direction of the airflow FA from the first branched flow path 5A is bent toward the air blowing fan 4 side (the rear side). In that situation, because the connection port between the basal end part 52A and the merge part 6 has a large area, the airflow FA of which the flow rate increased just before the basal end part 52A is not easily disturbed at the time of flowing into the merge part 6. Thus, the direction change inside the merge part 6 is smoothly carried out (the single-dot chain line arrow in Figure 9). The airflow FA from the first branched flow path 5A of which the direction was changed inside the merge part 6 flows past the air blowing fan 4 together with the airflows from the second to the fourth branched flow paths 5B to 5D before being discharged to the outside from the rear surface 3B side of the seatback 3.

In the above example, the airflow was explained regarding the situation in which the air blowing fan 4 is operated in such a direction that the air in the surroundings of the seat surface 3A of the seatback 3 is drawn in; however, in the situation in which the air blowing fan 4 is operated in the opposite direction so that air is blown out onto the seat surface 3A of the seatback 3, an airflow having a reversed airflow direction as compared to the above example is generated in the merge part 6, the first branched flow path 5A, and the like. Also, when the air is blown out onto the seat surface 3A of the seatback 3, air forwarded from the merge part 6 to the first branched flow path 5A flows along the lateral wall surface 51A of the first branched flow path 5A so as to be sequentially forwarded smoothly to the sixth to the first communication holes 7A-6 to 7A-1.

Next, actions and effects of the vehicle seat structure of the present embodiment will be explained.

In the vehicle seat 1 to which the structure described above is applied, the flow path forming member 32 forming the flow path for causing the air to flow between the seat surface 3A of the seatback 3 and the air blowing fan 4 includes the first to the fourth branched flow paths 5A to 5D extending along the rear surface 3B of the seatback 3; the merge part 6 in which the first to the fourth branched flow paths 5A to 5D merge; and the first to the fourth communication holes 7A to 7D communicating with the first to the fourth branched flow paths 5A to 5D and the seat surface 3A. In addition, of the first and the second branched flow paths 5A and 5B among the first to the fourth branched flow paths 5A to 5D, each of the lateral wall surfaces 51A and 51B that are each positioned at one end side in the width direction is structured with the plane that smoothly continues in the extending direction from the basal end to the distal end, and the first and the second communication holes 7A and 7B are each arranged to be close to the other end side in the width direction. By using this structure of the vehicle seat 1, in the first and the second branched flow paths 5A and 5B, the air flowing between the first and the second communication holes 7A and 7B and the merge part 6 is caused to flow smoothly along the lateral wall surfaces 51A and 51B. Thus, it is possible to enhance the air blowing efficiency of the first and the second branched flow paths 5A and 5B.

Also, in the vehicle seat structure of the present embodiment, the first and the second branched flow paths 5A and 5B include: the basal end parts 52A and 52B connected to the merge part 6; the distal end parts 53A and 53B positioned on the opposite side from the merge part 6 in the extending direction; and the enlarged parts 54A and 54B connecting together the basal end parts 52A and 52B and the distal end parts 53A and 53B, and the flow path widths of the enlarged parts 54A and 54B are made larger than the flow path widths of the basal end parts 52A and 52B and the distal end parts 53A and 53B. When the first and the second branched flow paths 5A and 5B are structured in this manner, because there are large intervals between the communication holes 7A, 7B provided in the enlarged parts 54A, 54B and the lateral wall surfaces 51A, 51B, it is easier for the air flowing through the first and the second branched flow paths 5A and 5B to flow along the lateral wall surfaces 51A and 51B. Thus, it is possible to further enhance the air blowing efficiency of the first and the second branched flow paths 5A and 5B.

Additionally, in the vehicle seat structure of the present embodiment, the enlarged parts 54A and 54B of the first and the second branched flow paths 5A and 5B are formed in such a manner that the flow path widths increase from the sections connected to the distal end parts 53A and 53B toward the central section in the extending direction and decrease from the central section toward the sections connected to the basal end parts 52A and 52B. With this structure, because there is an increase in the speed (the flow rate) of the air flowing through certain sections of the enlarged parts 54A and 54B positioned on the basal end parts 52A and 52B side, it is easier for the air to flow through the certain sections of the enlarged parts 54A and 54B positioned on the distal end parts 53A and 53B side. Accordingly, it is possible to further enhance the air blowing efficiency of the first and the second branched flow paths 5A and 5B.

In addition, in the vehicle seat structure of the present embodiment, the enlarged parts 54A and 54B of the first and the second branched flow paths 5A and 5B are formed in such a manner that the flow path depths increase from the sections connected to the distal end parts 53A and 53B toward the central section in the extending direction. With this structure, because there is a further increase in the flow volume of the air flowing through the certain sections of the enlarged parts 54A and 54B of the first and the second branched flow paths 5A and 5B positioned on the distal end parts 53A and 53B side, it is possible to efficiently enhance the air blowing efficiency of the first and the second branched flow paths 5A and 5B.

Furthermore, in the vehicle seat structure of the present embodiment, the enlarged parts 54A and 54B of the first and the second branched flow paths 5A and 5B have the sites α and β in which the increased amounts in the flow path depths are relatively greater. With this structure, it is possible to adjust the flow path depths in accordance with the changes in the flow volume of the air flowing through the enlarged parts 54A and 54B. In particular, by arranging the sites α and β in correspondence with the positions of the communication holes 7A and 7B, it is possible to adjust the flow path depths so as to accurately reflect the increases and the decreases in the flow volume in the enlarged parts 54A and 54B.

In addition, in the vehicle seat structure of the present embodiment, the air blowing fan 4 is provided in the merge part 6, and the enlarged parts 54A and 54B of the first and the second branched flow paths 5A and 5B are formed in such a manner that the flow path depths decrease from the central section in the extending direction toward the sections connected to the basal end parts 52A and 52B and subsequently increase. With this structure, because there is a further increase in the speed (the flow rate) of the air flowing through the certain sections of the enlarged parts 54A and 54B positioned on the basal end parts 52A and 52B side, it is further easier for the air to flow through the certain sections of the enlarged parts 54A and 54B positioned on the distal end parts 53A and 53B side. In addition, because a large area is ensured for the connection port between the basal end part 52A of the first and the second branched flow paths 5A, 5B and the merge part 6, it is also possible to cause the air to smoothly flow between the first and the second branched flow paths 5A, 5B and the merge part 6. In addition, in correspondence with the sections in which the flow path depths of the enlarged parts 54A and 54B decrease, it is possible to increase the thickness of a cushion material in a certain site of the seatback cushion 31 adjacent to the decreased section. It is therefore also possible to enhance cushioning characteristics of the seatback 3.

Furthermore, in the vehicle seat structure of the present embodiment, the flow path forming member 32 includes: the first airtight part 33 provided on the rear surface 3B of the seatback cushion 31; and the second airtight part 34 joined with the first airtight part 33 from the side opposite to the seatback cushion 31. In addition, as for the joining face 8 of the first and the second airtight parts 33 and 34, the proximal section 8A positioned closer to the merge part 6 is formed so as to extend along the merge part 6 and the first to the fourth branched flow paths 5A to 5D, and the distal section 8B positioned farther from the merge part 6 is formed so as to be apart from the first and the second branched flow paths 5A and 5B. With the flow path forming member 32 constructed in this manner, it is possible to enhance joining (adhesion) strength of the first and the second airtight parts 33 and 34, while making it easier for changes in the pressure (negative pressure when air is drawn in from the seat surface 3A, and positive pressure when air is blown out onto the seat surface 3A) occurring due to driving of the air blowing fan 4 provided in the merge part 6 to act on the merge part 6 and the first to the fourth branched flow paths 5A to 5D. In addition, when an occupant sits on the vehicle seat 1, a relatively large load acts on an upper part of the seatback 3, and the flow path in the surroundings of the merge part 6 provided in the upper part could easily be deformed and crushed; however, because the proximal section 8A of the joining face 8 is formed so as to extend along the merge part 6 and the first to the fourth branched flow paths 5A to 5D, it is also possible to reduce the chance of having a deformation of the flow path in the surroundings of the merge part 6. In addition, because the distal section 8B of the joining face 8 is formed so as to be apart from the first and the second branched flow paths 5A and 5B, it is also possible to reduce the chance of having a deformation in the surroundings of the first and the second branched flow paths 5A and 5B, which might occur due to a suspension support of the seatback cover.

Certain embodiments of the present invention have thus been explained; however, the present invention is not limited by the embodiments described above. Various modifications and changes are possible based on technical concepts of the present invention.

For example, in the above embodiment, the example was explained in which the structure of the present invention is applied to the flow path formed in the seatback 3 of the vehicle seat 1; however, it is also acceptable to apply the structure of the present invention to a flow path formed in the seat part 2 of the vehicle seat 1.

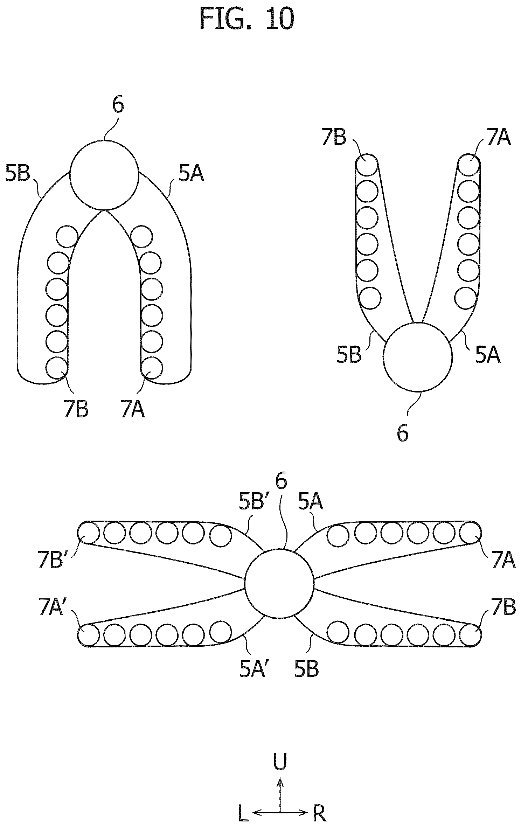

Additionally, in the above embodiment, the example was explained in which the first and the second branched flow paths 5A and 5B include the enlarged parts 54A and 54B each having a larger flow path width, and the first and the second communication holes 7A and 7B are arranged to be close to the outer side of the first and the second branched flow paths 5A and 5B in the seat width direction; however, like in a first modification example shown at the top left of Figure 10, for instance, the flow path widths of the first and the second branched flow paths 5A and 5B may be substantially constant, and the first and the second communication holes 7A and 7B may be arranged to be close to the inner side of the first and the second branched flow paths 5A and 5B in the seat width direction.

Furthermore, in the above embodiment, the example was explained in which the merge part 6 is positioned in the upper part of the seatback 3, and the first and the second branched flow paths 5A and 5B extend from the merge part 6 toward the seat bottom; however, like in a second modification example shown at the top right of Figure 10, for instance, another configuration is also acceptable in which the first and the second branched flow paths 5A and 5B extend toward the seat top from the merge part 6 positioned in a lower part of the seatback. Alternatively, in the situation in which the seatback has a large width, it is also acceptable, like in a third modification example shown at the bottom of Figure 10, to arrange the merge part 6 at the center of the seatback, so that the branched flow paths 5A and 5B extend from the merge part 6 toward a right part of the seat, and the branched flow paths 5A' and 5B' extend from the merge part 6 toward a left part of the seat.

### [Reference Signs List]

1 Vehicle seat
2 Seat part
2A Seating surface
21 Seat part cushion
3 Seatback
3A Seat surface
31 Seatback cushion (Cushion part)
31A to 31D Air blowing opening
31E Attachment hole
31F Concave part
31G Cover part
32 Flow path forming member
33 First airtight part
33A Front side section
33B Cover section
34 Second airtight part
34A Opening part
4 Air blowing fan
5A to 5D First to fourth branched flow paths
51A, 51B, 51A', 51B' Lateral wall surface
52A, 52B Basal end part
53A, 53B Distal end part
54A, 54B Enlarged part
6 Merge part
7A to 7D First to fourth communication holes
8 Joining face of first and second airtight parts
8A Proximal section
8B Distal section
8C, 8D Adjacent region
81 Outer groove part
82 Inner groove part
α, β Site in which the increase amount in the flow path depth is relatively larger
FA, FB Airflow
X Seat component part
Y Pullout port

## Claims

1. A vehicle seat structure comprising:
an air blowing fan that conditions air in a surrounding of a seat surface of a vehicle seat; and
a flow path forming member that forms a flow path for causing air to flow between the seat surface and the air blowing fan,
wherein the flow path forming member includes:
a plurality of branched flow paths extending along a rear surface positioned opposite the seat surface;
a merge part in which the plurality of branched flow paths merge; and
a plurality of communication holes provided to be arranged along an extending direction of the branched flow paths and communicating with the branched flow paths and the seat surface, the vehicle seat structure being **characterized in that**
at least one of the plurality of branched flow paths has a lateral wall surface positioned at one end side in a prescribed direction that extends along the rear surface and intersects the extending direction of the branched flow path, the lateral wall surface being structured with a plane that smoothly continues in the extending direction from a basal end connected to the merge part to a distal end on an opposite side from the merge part, and
the communication holes communicating with the branched flow path are arranged to be close to an other end side in the prescribed direction.

2. The vehicle seat structure according to claim 1, wherein
the branched flow paths each include:
a basal end part connected to the merge part;
a distal end part positioned on an opposite side from the merge part in the extending direction; and
an enlarged part connecting together the basal end part and the distal end part, and
the enlarged part is formed in such a manner that a flow path width in the prescribed direction is greater than flow path widths in the prescribed direction in the basal end part and the distal end part.

3. The vehicle seat structure according to claim 2, wherein
the enlarged part is formed in such a manner that the flow path width in the prescribed direction increases from a section connected to the distal end part toward a central section in the extending direction and decreases from the central section toward a section connected to the basal end part.

4. The vehicle seat structure according to claim 2, wherein
the enlarged part is formed in such a manner that a flow path depth in a thickness direction orthogonal to the extending direction and to the rear surface increases from a section connected to the distal end part toward a central section in the extending direction.

5. The vehicle seat structure according to claim 4, wherein
the enlarged part has a site in which an increase amount in the flow path depth is relatively larger.

6. The vehicle seat structure according to claim 5, wherein
the site in which the increase amount in the flow path depth is relatively greater is positioned in correspondence with positions of the communication holes.

7. The vehicle seat structure according to claim 2, wherein
the air blowing fan is provided in the merge part, and
the enlarged part is formed in such a manner that a flow path depth in a thickness direction orthogonal to the extending direction and to the rear surface decreases from a central section in the extending direction toward a section connected to the basal end part and subsequently increases.

8. The vehicle seat structure according to claim 1, wherein
the air blowing fan is provided in the merge part,
the flow path forming member includes:
a first airtight part provided on a rear surface of a cushion part forming the seat surface; and
a second airtight part joined with the first airtight part from a side opposite to the cushion part, and
as for a joining face of the first and the second airtight parts, a proximal section positioned closer to the merge part is formed so as to extend along the merge part and the branched flow paths, and
a distal section positioned farther from the merge part is formed so as to be apart from the branched flow paths.
